Europäisches Patentamt

European Patent Office

Office européen des brevets

(11) Publication number: **0 350 423**
A2

# EUROPEAN PATENT APPLICATION

(21) Application number: 89500075.0

(22) Date of filing: 03.07.89

(51) Int. Cl.⁵: **B 62 D 6/02**
     **B 62 D 5/06**

(30) Priority: 04.07.88 ES 8802095

(43) Date of publication of application:
     10.01.90 Bulletin 90/02

(84) Designated Contracting States: DE FR GB IT

(71) Applicant: **Perez Lumbreras, Manuel**
     **Avda. Central, 6**
     **Baranain Navarra (ES)**

(72) Inventor: **Perez Lumbreras, Manuel**
     **Avda. Central, 6**
     **Baranain Navarra (ES)**

(74) Representative: **Carpintero Lopez, Francisco (ES)**
     **HERRERO & ASOCIADOS, S.L. Alcalá, 21**
     **E-28014 Madrid (ES)**

(54) Mechanism for improved assisted-steering for motor vehicles.

(57) An improved assisted steering mechanism is described which permits an additional preload to be introduced, in a reduced space and at low cost, on the spring that centers the distributor valve, subsequent to centering that distributor valve. The mechanism that is described also permits the said additional preload to be modified depending on the vehicle speed.

This mechanism is made up of two components (1) and (2) which turn on the same shaft E and which are in a relative fixed position on the steering of shaft E. The relative gyration of the two components (1) and (2) determines the opening of the distributor valve.

Component (1) has axial enlargements which are inserted in notches pertaining to a spring-washer (6') which turns solidarily with component (2). The relative gyration of the components (1) and (2) forces the preload of the washer (6') to be overcome.

Force "F" is applied on the washer by joint (16) caused by pressure in chamber A, depending on the vehicle speed. The preload can thus be varied in terms of the speed.

FIG.-6

**Description**

## MECHANISM FOR IMPROVED ASSISTED-STEERING FOR MOTOR VEHICLES

### PURPOSE OF INVENTION

The present invention refers to an assisted-steering mechanism for motor vehicles, which is particularly designed to achieve better driving safety.

The invention aims at improving the hydraulic steering systems, because the driver should make a certain effort to manoeuvre the vehicle when it is travelling at high speed.

### ANTECEDENTS OF INVENTION

The assisted steering mechanisms for motor vehicles are commonplace knowledge, where the driver is assisted, in his steering wheel movement in steering the vehicle, by a hydraulic pump which supplies pressurized oil to the steering mechanism.

Hydraulic assisted steering is governed by a distributor valve which is worked by the driver, such that when this stops working, the valve returns to its neutral position, and hydraulic assistance is then stopped, by means of a centering spring.

Through that valve, the driver directs the oil, from the hydraulic pump, to the respective side of the hydraulic cylinder which is designed to reduce the driver's effort.

When the vehicle is travelling at high speed, however, it may be a great advantage for safety reasons if the driver is able to make a certain effort to avoid the vehicle leaving the lane without warning.

### DESCRIPTION OF INVENTION

The present invention is designed to improve the hydraulic steering systems, based on a mechanism which compels the driver to make a certain effort to manoeuvre the vehicle when this is travelling at high speed.

Based on this invention, the drive mechanism of the distributor valve is consists of two components which rotate on one and the same shaft and which, by the relative movement of one in respect of the other, operate that distributor valve.

These two components are set relatively and fixed to the spin axis of the steering, either because they are joined to one another by a thin torsion bar, which is twisted when the spin movement is produced, or their axial movement is restricted by other means.

One of the components has enlargements in an axial direction, which fit into slots located in a spring-washer which turns jointly with the second component. The relative spin movement of the two components is hindered, because it forces the enlargements to leave the slots against the force of the spring-washer. Before obtaining hydraulic assistance, the driver must overcome that difficulty providing the corresponding effort.

Based on a variant of the invention, the enlargements are arranged on diametrally opposed stubs in the first component, and the second component is arranged in two diametrally opposed wings, which have threaded openings. These openings are used to secure the washer to the second component.

In another variant of the invention, the washer is secured to the second component by a fitting pin.

In another variant of the invention, the openings foreseen in the washer are threaded, whilst the openings in the second component are passers, that is to say smooth.

In another variant of the invention, the slots are located in the first component and the enlargements are located in the spring-washer.

In another variant of the invention, the slots are formed by balls which fit in the first component.

In another variant of the invention, the settings are formed by rollers.

In another variant of the invention, instead of the spring-washer there is a set of parts which turn jointly with the second component and exercise a flexible stress between the enlargements and slots.

In an additional variant of the assisted steering mechanism, there is a chamber which on the one side communicates with the oil inlet conduit to the distributor valve, via a first valve and on the other side, via a second valve with the oil return conduit to the tank.

The pressure in the chamber works on the spring washer, increasing the effort to be made by the driver to provoke a relative spin of both the first and second components mentioned above. The pressure works via a gasket which acts as closure for the chamber; this gasket has a metal reinforcement so that the entire stress created by the pressure of the chamber is applied on the enlargements.

When the pressure in that chamber is equal to the input pressure, because the first valve is open and the second one closed, an important stress is obtained, pushing on the washer.

On the contrary, when the pressure in the chamber is equal to the return pressure, because the first valve is closed and the second one open, the stress enforced on the washer is zero.

In a variant of the invention, the first valve is controlled by the inlet pressure, whilst the second valve limits the pressure with a permanent restricted pass or bypass.

In another variant, the first valve is controlled electronically depending on the vehicle speed.

In another variant, both the first valve and the second one are controlled electronically in terms of the vehicle speed.

In another variant of the invention, the first valve or the second valve, or both, are controlled by the driver of the vehicle.

In another variant of the invention, the stress exerted by the closure joint of the chamber is exerted by one or more intermediary washers which can be moved axially, but which are unable to turn. It is therefore possible to make the steering mechanism irreversible, and this helps to increase driving safety in special cases.

The assisted steering mechanism, which is object of the invention, will be described in further detail below, with the help of the enclosed figures, where the following has been represented:

Figure 1.- Shows a sectional view and front view of one of the components or set of parts that form part of the mechanism.

Figure 2.- Is a front and cross section of the second component.

Figure 3.- Is a front and cross section of the spring-washer.

Figure 4.- Shows the aforegoing components assembled together.

Figures 5A and 5B.- Show sectional views of additional variants of the component shown in figure 1.

Figure 6.- Shows a second variant of the object of invention, where the chamber and valves controlled by the inlet pressure can be observed.

Figure 7.- Shows one of the electronically controlled valves.

Figure 8.- Lastly shows the joint which works on an intermediary washer.

PREFERENT EXECUTION OF THE INVENTION

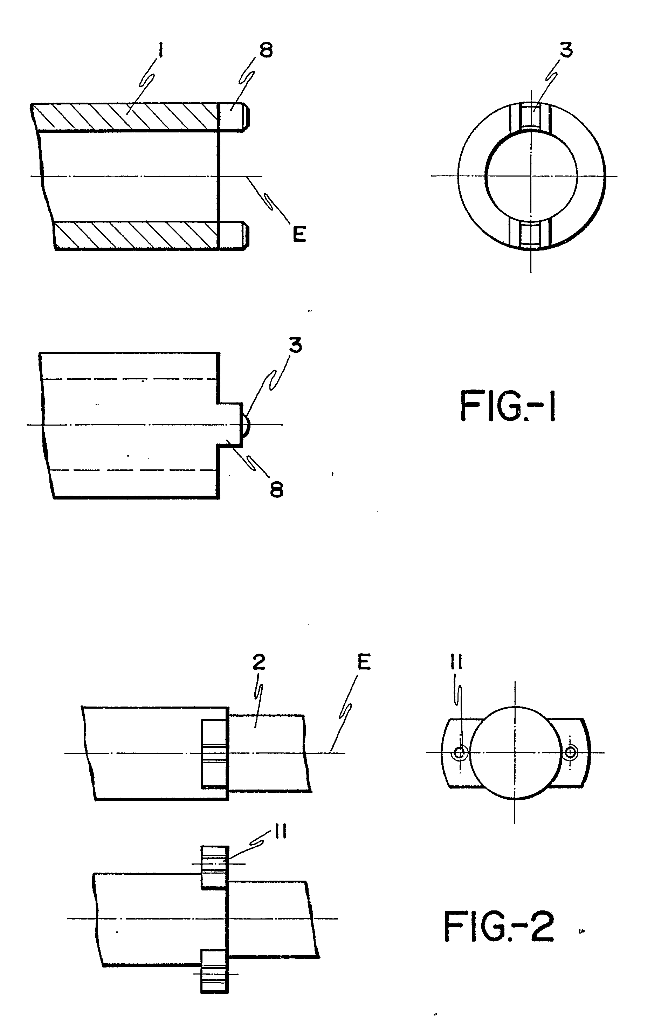

Pursuant to these figures and with specific reference to figure 1, a cross section of component A of the assisted steering mechanism, object of the invention is shown. It is observed here that the enlargements (3) are arranged on diametrally opposed lugs (8). These enlargements (3) are what fit into slots performed in the spring washer (6'), in accordance with this variant of the invention.

Figure 2 shows the assisted steering mechanism component, object of invention. In this variant of the invention, this component (2) has two wings (10) with threaded openings (11) which are designed to receive the lock screws of the spring washer in the actual component (2).

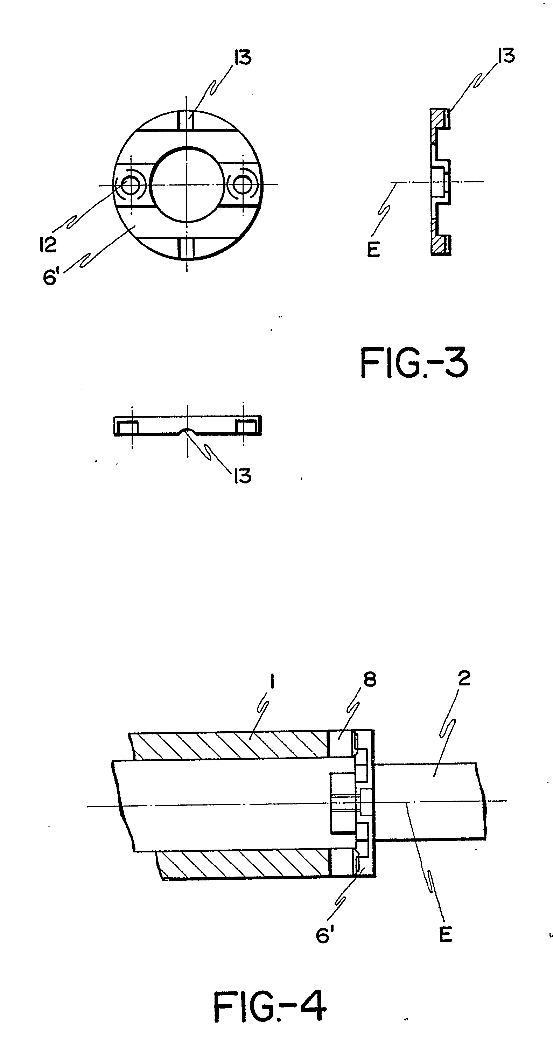

In accordance with figure 3, the spring washer (6') has diametrally opposed openings (12) to pass the lock screws, and also connection slots (13) located in a diametre at 90s from the diametre of the openings relating to the screw pass. This washer (6') has variable section along the circumference, as is advisable to achieve a rigidness and elasticity of its different parts.

This washer is screwed to component (2) after making the enlargements (3) coincide with the connection slots (13), without altering the neutral position of the distributor valve.

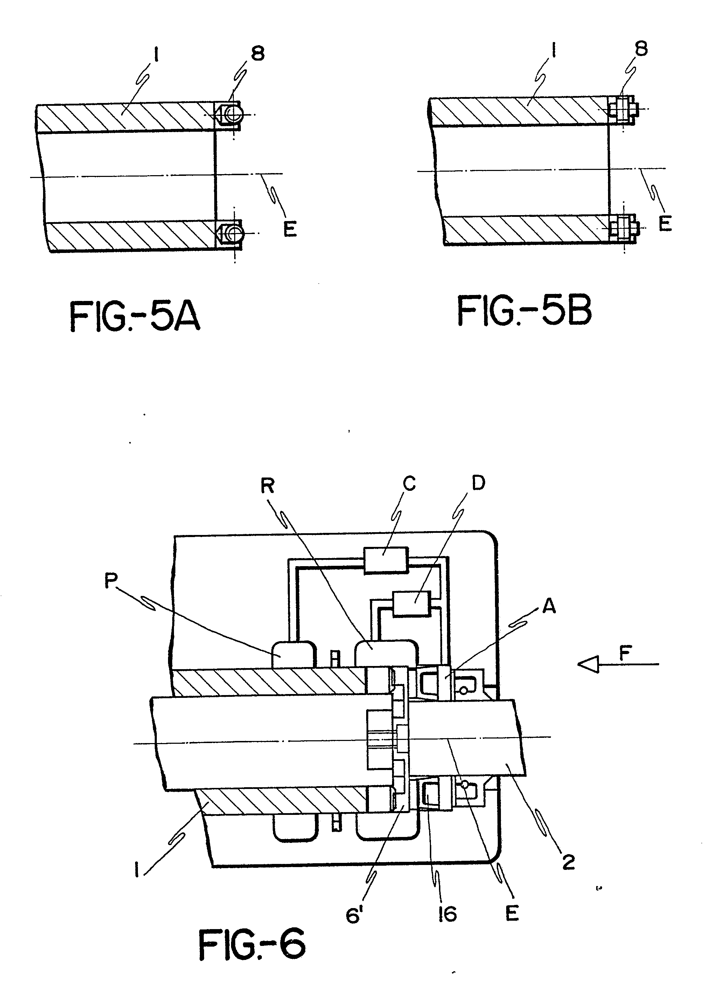

Figures 5A and 5B show these variants of the enlargements performed in the component (1) of the assisted steering valve object of the invention. In figure 5A, the enlargements are formed by balls inserted in the component (1).

In figure 5B, the enlargements are formed by rollers, which permits the slip movement to be eliminated and consequently wear.

In figure 6, a variant of the steering mechanism object of invention is shown. In this case, the oil pressure in chamber A exercises a force "F" on the washer (6') by means of the joint (16). This force "F" is added to the elastic force exercised by the washer on the enlargements, and consequently the relative spin resistance of components (1) and (2) is suitably increased.

Washer (6') and joint (16) are built so that the thrust movement comes about on the opposite side of the connection slots, such that force "F" is entirely transmitted on the enlargements.

The joint (16) is built so that it can transmit the entire force to that contrary part, and accordingly has suitable strength.

This strength can also be obtained using various rigid components between the joint (16) and the washer (6').

Chamber A is in communication, controlled by valve C, with the oil inlet conduit to direction B and also in communciation, controlled by valve D, with the oil return conduit to deposit B.

By means of valves C and D, the pressure in chamber A can be made equal to the pressure in the inlet conduit of direction P, in other words, equal to the pressure in the return conduit R.

Valve C remains shut when pressure in the inlet conduit is small, as occurs when the vehicle is travelling at high speed. Pressure in chamber A is equal to pressure in the inlet conduit, and under these conditions a force "F" is exerted on the washer and the driver's effort is increased.

Valve C remains shut when pressure in the inlet conduit is high, as occurs when the vehicle is moving at small speed or is at a standstill. The pressure in chamber A is equal to the pressure in the return conduit, because valve C has a permanent restricted pass. Under these conditions, force "F" is zero and the driver's effort is less.

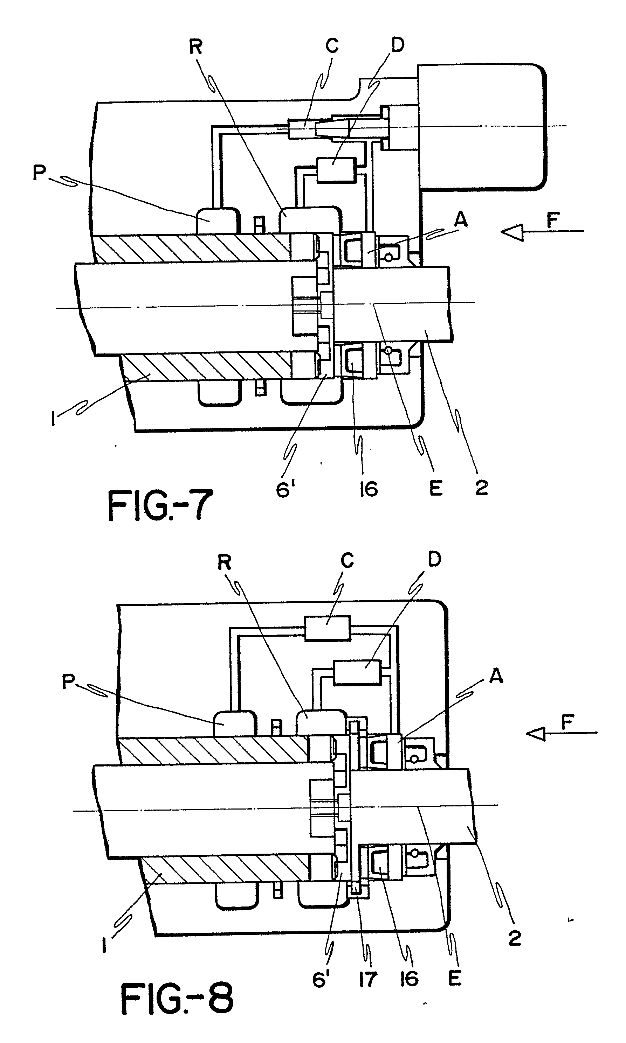

Figure 7 shows another variant of the invention, where valve C is controlled electronically. An electronic activator gradually opens valve C, according to the electronic signal which it receives when the vehicle speed increases.

In another variant of the invention, the two valves C and D are controlled electronically in terms of the vehicle's speed.

In figure 8, the stress exercised by retainer (16) over the spring-washer (6') is carried out through an intermediary washer (17) which is designed so it cannot turn. The spin movement of the component (2) is additionally hindered by friction with the washer (17) which remains without turning. In order to provide a suitable friction surface, the friction occurs between the washer (17) and a second washer (18) which rests on the washer-spring (6') and is dragged by this.

Understandably, the executions described above are merely by way of illustration, and it is understood that an expert on the matter may incorporate a number of modifications or variations which should be considered within the scope of this invention, so long as these do not affect its essential nature and are contained in the annex claims.

## Claims

1.- Improved assisted steering mechanism for motor vehicles, characterised because it has two components or sets of parts (1) and (2) which can turn on the same shaft E, one of whose components (1) has enlargements (3) inserted in connecting slots (4) of a part (6') belonging to component (2), against the force of a spring.

2.- Improved assisted steering mechanism for motor vehicles, in accordance with claim 1, characterised because the enlargements (3) of the component (1) are arranged in diametrally opposed lugs (8), whilst component (2) has wings (10) with threaded openings (11), there also being connecting slots (13) performed on the spring itself (6') in the form of washer, and there are openings (12) to secure it to the component (2).

3.- Improved assisted steering mechanism for motor vehicles, in accordance with claim 1, characterised because the enlargements (3) are formed by balls (14).

4.- Improved assisted steering mechanism for motor vehicles, in accordance with claim 1, characterised because the enlargements (3) consist of rollers (15).

5.- Improved assisted steering mechanism for motor vehicles, in accordance with claim 1, characterised because the slots are located in the component (1) and the enlargements in a part (6') belonging to the component (2).

6.- Improved assisted steering mechanism for motor vehicles, in accordance with any of the aforegoing claims, where the mechanism counts on a control valve, characterised because there is a chamber A which is in communication, controlled by a valve C, with the conduit of inlet P and also in communication, controlled by valve D, with the return conduit R.

7.- Improved assisted steering mechanism for motor vehicles, in accordance with claim 6, characterised because the pressure in chamber A exerts a force through a joint (16) on the washer (6') which depends on the pressure in that chamber.

8.- Improved assisted steering mechanism for motor vehicles, in accordance with claim 7, characterised because the opening and/or closure of valves C and D determine that the pressure in chamber A is the pressure in the inlet conduit P or the pressure in the return conduit R.

9.- Improved assisted steering mechanism for motor vehicles, in accordance with claim 7, characterised because the contact between the washer (6') and the joint (16) takes place exclusively on the opposite part of the slots (13).

10.- Improved assisted steering mechanism for motor vehicles, in accordance with claim 6, characterised because valves C and D are controlled by pressure in the inlet conduit P.

11.- Improved assisted steering mechanism for motor vehicles, in accordance with claim 6, characterised because valve C is electronically controlled in terms of the vehicle speed.

12.- Improved assisted steering mechanism for motor vehicles, in accordance with claim 6, characterised because the two valves C and D are electronically controlled in terms of the vehicle speed.

13.- Improved assisted steering mechanism for motor vehicles, in accordance with claims 6 to 12, characterised because the force exerted by the pressure in chamber A, by means of joint (16) on the washer (6') is performed through an intermediary washer (17) without possibility of turning, originating a friction between that washer (17) and the washer (6') which turns worked by the driver.

FIG.-1

FIG.-2

FIG.-3

FIG.-4

FIG.-5A

FIG.-5B

FIG.-6

FIG.-7

FIG.-8